# EUROPEAN PATENT APPLICATION

(11) **EP 4 202 715 A1**
(43) Date of publication of application: **28.06.2023**
(21) Application number: 21858024.9
(22) Date of filing: 11.06.2021
(51) Int. Cl.: G06F 16/13, G06F 16/182

(54) **INFORMATION PROCESSING DEVICE, INFORMATION PROCESSING METHOD, AND INFORMATION PROCESSING PROGRAM**

(30) Priority: 21.08.2020 JP 2020140419
(71) Applicant: FUJIFILM Corporation, Tokyo 106-8620 (JP)
(72) Inventor: OISHI, Yutaka, Tokyo 106-8620 (JP); KONDO, Michitaka, Tokyo 106-8620 (JP); UNO, Yuko, Tokyo 106-8620 (JP)
(74) Representative: Klunker IP Patentanwälte PartG mbB
(86) International application number: PCT/JP2021/022331
(87) International publication number: WO 2022/038873

(57) **Abstract**

An information processing apparatus sequentially receives a first object list corresponding to a first prefix from each of a plurality of storage nodes, removes, in a case where a processed storage node exists, a second prefix held by the processed storage node from the first object list received from a storage node being processed, receives a second object list including objects of which the number is decreased by removal of the second prefix from the storage node being processed, and transmits, to a user terminal, an object list obtained by adding the second object list to the first object list from which the second prefix is removed.

## Description

### BACKGROUND OF THE INVENTION

### 1. Field of the Invention

The present disclosure relates to an information processing apparatus, an information processing method, and an information processing program.

### 2. Description of the Related Art

A technique of detecting redundant partial data from a plurality of pieces of partial data included in a data file acquired from a storage node in which the data file is stored is disclosed (refer to JP2017-142664A).

### SUMMARY OF THE INVENTION

On the other hand, for example, in storage systems such as an object storage system that handles data as an object, there is a system having a function of responding, in a case where a prefix such as "/" or "/foo/" representing a hierarchy of an object list to be acquired is designated, an object list including objects in layers lower than the prefix.

In such a system, the object list may include not only an object but also a portion obtained by excluding a designated prefix and an obj ect name from an object key of the object. In this case, in a case where a plurality of storage nodes for storing objects exist, redundancy included in the object list acquired from each of the plurality of storage nodes may not be removed.

The technique described in JP2017-142664A is a technique for removing redundancy in an acquired data file, and is not a technique for removing redundancy included in an object list acquired from each of a plurality of storage nodes.

The present disclosure has been made in view of the above circumstances, and an object of the present disclosure is to provide an information processing apparatus, an information processing method, and an information processing program capable of removing redundancy included in an object list acquired from each of a plurality of storage nodes.

According to the present disclosure, there is provided an information processing apparatus comprising: at least one processor, in which the processor is configured to execute object list acquisition processing including receiving an acquisition request of an object list that is transmitted from a user terminal, sequentially transmitting, to each of a plurality of storage nodes, an acquisition request of a first object list corresponding to a first prefix according to the acquisition request, sequentially receiving the first object list corresponding to the acquisition request of the first object list from each of the plurality of storage nodes, inquiring, in a case where a processed storage node which is the storage node that is already processed exists, of the processed storage node whether or not the processed storage node holds a second prefix included in the first object list received from a storage node being processed, removing, in a case where a response indicating that the processed storage node holds the second prefix is received from the processed storage node, the second prefix held by the processed storage node from the first object list received from the storage node being processed and transmitting an acquisition request of a second object list including objects of which the number is decreased by removal of the second prefix to the storage node being processed, receiving the second object list responded from the storage node being processed, and transmitting, to the user terminal, an object list obtained by adding the second object list to the first object list from which the second prefix is removed.

In the information processing apparatus according to the present disclosure, the processor may be configured to execute the object list acquisition processing in a case where the number of the storage nodes is equal to or larger than a predetermined threshold value, receive the object list from each of the plurality of storage nodes in a case where the number of the storage nodes is smaller than the threshold value, and remove redundancy of the second prefix in a plurality of the received object lists and transmit an object list obtained by merging the plurality of object lists to the user terminal.

Further, in the information processing apparatus according to the present disclosure, the processor may be configured to inquire, in the object list acquisition processing, for the second object list, of the processed storage node whether or not the processed storage node holds the second prefix in the same manner as in the first object list and repeat, in a case where a response indicating that the processed storage node holds the second prefix is received from the processed storage node, processing of removing the second prefix held by the processed storage node from the second object list received from the storage node being processed until a response indicating that the processed storage node does not hold the second prefix is received from the processed storage node.

Further, in the information processing apparatus according to the present disclosure, the storage node may be a storage node that constitutes an object storage system, the first prefix may be a portion of an object key that represents a hierarchy of an object list to be acquired, and the second prefix may be a portion of the object key that is obtained by excluding at least an object name and the first prefix.

Further, in the information processing apparatus according to the present disclosure, the processor may be configured to set, in a case where the acquisition request of the object list that is transmitted from the user terminal does not include the first prefix, all objects held by the plurality of storage nodes as objects to be processed and execute the object list acquisition processing.

Further, according to the present disclosure, there is provided an information processing method executed by a processor of an information processing apparatus, the method comprising: object list acquisition processing including receiving an acquisition request of an object list that is transmitted from a user terminal, sequentially transmitting, to each of a plurality of storage nodes, an acquisition request of a first object list corresponding to a first prefix according to the acquisition request, sequentially receiving the first object list corresponding to the acquisition request of the first object list from each of the plurality of storage nodes, inquiring, in a case where a processed storage node which is the storage node that is already processed exists, of the processed storage node whether or not the processed storage node holds a second prefix included in the first object list received from a storage node being processed, removing, in a case where a response indicating that the processed storage node holds the second prefix is received from the processed storage node, the second prefix held by the processed storage node from the first object list received from the storage node being processed and transmitting an acquisition request of a second object list including objects of which the number is decreased by removal of the second prefix to the storage node being processed, receiving the second object list responded from the storage node being processed, and transmitting, to the user terminal, an object list obtained by adding the second object list to the first object list from which the second prefix is removed.

Further, according to the present disclosure, there is provided an information processing program for causing a processor of an information processing apparatus to execute object list acquisition processing comprising: receiving an acquisition request of an object list that is transmitted from a user terminal, sequentially transmitting, to each of a plurality of storage nodes, an acquisition request of a first object list corresponding to a first prefix according to the acquisition request, sequentially receiving the first object list corresponding to the acquisition request of the first object list from each of the plurality of storage nodes, inquiring, in a case where a processed storage node which is the storage node that is already processed exists, of the processed storage node whether or not the processed storage node holds a second prefix included in the first object list received from a storage node being processed, removing, in a case where a response indicating that the processed storage node holds the second prefix is received from the processed storage node, the second prefix held by the processed storage node from the first object list received from the storage node being processed and transmitting an acquisition request of a second object list including objects of which the number is decreased by removal of the second prefix to the storage node being processed, receiving the second object list responded from the storage node being processed, and transmitting, to the user terminal, an object list obtained by adding the second object list to the first object list from which the second prefix is removed.

According to the present disclosure, it is possible to remove redundancy included in an object list acquired from each of a plurality of storage nodes.

### BRIEF DESCRIPTION OF THE DRAWINGS

Fig. 1 is a block diagram illustrating an example of a configuration of a recording and reproducing system.
Fig. 2 is a diagram for explaining an object.
Fig. 3 is a block diagram illustrating an example of a hardware configuration of an information processing apparatus.
Fig. 4 is a diagram illustrating an example of a management screen.
Fig. 5 is a diagram for explaining an object list in a case where one storage node is provided.
Fig. 6 is a diagram for explaining an object list in a case where a plurality of storage nodes are provided.
Fig. 7 is a block diagram illustrating an example of a functional configuration of the information processing apparatus.
Fig. 8 is a diagram for explaining details of object list acquisition processing.
Fig. 9 is a diagram for explaining details of object list acquisition processing.
Fig. 10 is a flowchart illustrating an example of object list acquisition processing.
Fig. 11 is a diagram for explaining details of object list acquisition processing according to a modification example.

### DESCRIPTION OF THE PREFERRED EMBODIMENTS

Hereinafter, an example of an embodiment for performing a technique according to the present disclosure will be described in detail with reference to the drawings.

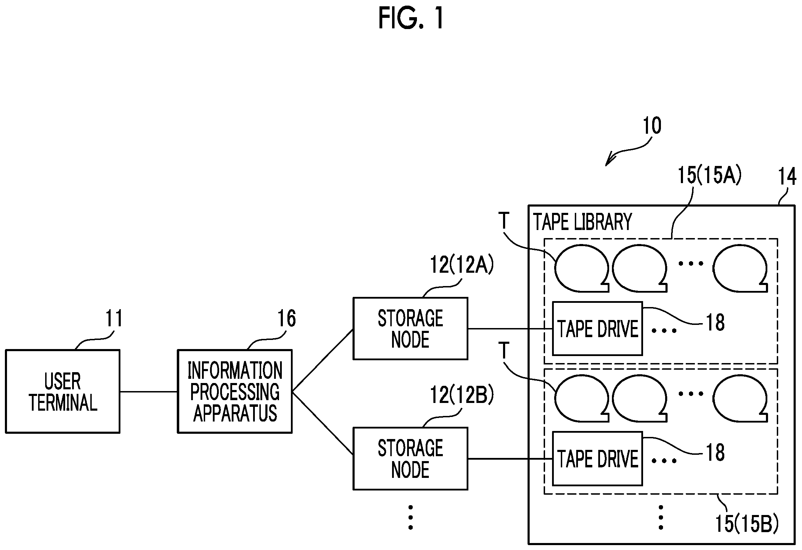

First, a configuration of a recording and reproducing system 10 according to the present embodiment will be described with reference to Fig. 1. As illustrated in Fig. 1, the recording and reproducing system 10 includes a plurality of storage nodes 12, a tape library 14, and an information processing apparatus 16. Each storage node 12 and the information processing apparatus 16 are communicably connected to each other via a network. In the following, in a case of distinguishing each storage node 12, an alphabet is added to an end of the reference numeral, such as the storage node 12A and the storage node 12B. Examples of the storage node 12 and the information processing apparatus 16 include a server computer and the like. In addition, the information processing apparatus 16 is communicably connected to a user terminal 11 via a network. Examples of the user terminal 11 include a personal computer and the like.

The tape library 14 includes a plurality of slots (not illustrated) and a plurality of tape drives 18, and a magnetic tape T as an example of a recording medium is loaded into each slot. Examples of the magnetic tape T include a linear tape-open (LTO) tape.

In a case where the storage node 12 writes or reads data to or from the magnetic tape T, the magnetic tape T as a write target or a read target is loaded from the slot into a predetermined tape drive 18. In a case where data is written or read to and from the magnetic tape T loaded into the tape drive 18, the magnetic tape T is unloaded from the tape drive 18 into the slot in which the magnetic tape T is originally loaded.

Further, the tape library 14 is divided into logical libraries 15 that are a plurality of logical tape libraries. In the following, in a case of distinguishing each logical library 15, an alphabet is added to an end of the reference numeral, such as the logical library 15A and the logical library 15B.

Each logical library 15 includes a plurality of slots and a plurality of tape drives 18. In the present embodiment, a case where the number of slots and the number of tape drives 18 included in each logical library 15 are the same will be described. On the other hand, the number of slots and the number of tape drives 18 included in each logical library 15 may be different from each other. Further, in the present embodiment, a case where the number of the storage nodes 12 and the number of the logical libraries 15 are the same will be described. On the other hand, the number of the storage nodes 12 and the number of the logical libraries 15 may be different from each other.

The storage node 12 and the logical library 15 have a one-to-one correspondence, and each storage node 12 is connected to the tape drive 18 of each of the logical libraries 15 different from each other. Therefore, for example, the storage node 12A can write or read data to or from the magnetic tape T loaded in the slot of the logical library 15A by controlling the tape drive 18 of the logical library 15A to which the storage node 12Ais connected. On the other hand, for example, the storage node 12A cannot control the logical library 15B to which the storage node 12A is not connected. Thus, the storage node 12A cannot write or read data to or from the magnetic tape T loaded in the slot of the logical library 15B.

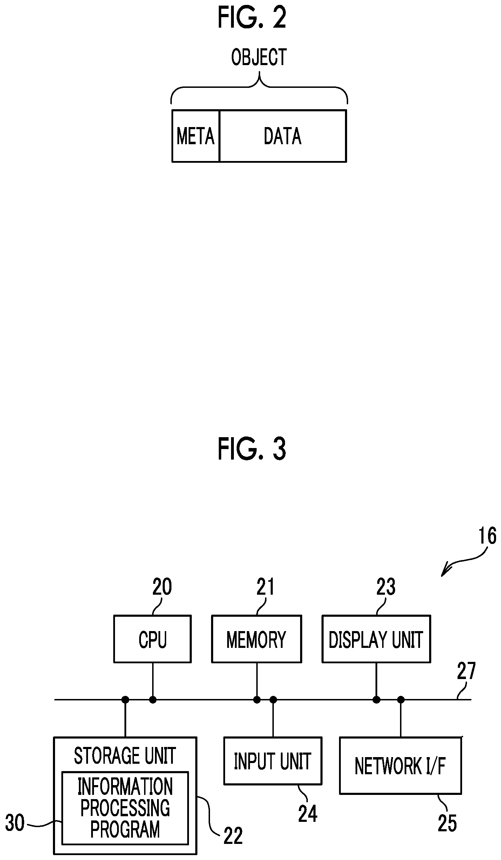

In the present embodiment, as an example, as illustrated in Fig. 2, as a unit for handling data to be recorded in the magnetic tape T, an example of an embodiment in which an object including data to be saved by a user such as document data and image data and metadata related to the data is applied will be described. In the example of Fig. 2, the metadata is referred to as "meta". A storage system that handles the object is called an object storage system. That is, the storage node 12 is a storage node that constitutes an object storage system. The metadata includes, for example, identification information of an object such as an object key, and attribute information such as an object name, a data size, and a time stamp. The recording order of the data and the metadata when recording the object in the magnetic tape T is not particularly limited, and may be an order of the metadata and the data or an order of the data and the metadata.

Next, a hardware configuration of the information processing apparatus 16 according to the present embodiment will be described with reference to Fig. 3. As illustrated in Fig. 3, the information processing apparatus 16 includes a central processing unit (CPU) 20, a memory 21 as a temporary memory area, and a non-volatile storage unit 22. Further, the information processing apparatus 16 includes a display unit 23 such as a liquid crystal display, an input unit 24 such as a keyboard and a mouse, and a network interface (I/F) 25 connected to a network. The CPU 20, the memory 21, the storage unit 22, the display unit 23, the input unit 24, and the network I/F 25 are connected to a bus 27.

The storage unit 22 is realized by a hard disk drive (HDD), a solid state drive (SSD), a flash memory, or the like. An information processing program 30 is stored in the storage unit 22 as a storage medium. The CPU 20 reads the information processing program 30 from the storage unit 22, develops the read information processing program 30 in the memory 21, and executes the developed information processing program 30.

The user terminal 11 performs various requests such as saving of the object in the recording and reproducing system 10, acquisition of the object from the recording and reproducing system 10, and acquisition of the object list from the recording and reproducing system 10, by using various application programming interfaces (APIs) provided by the recording and reproducing system 10.

As described above, the recording and reproducing system 10 according to the present embodiment is an object storage system. That is, the recording and reproducing system 10 according to the present embodiment is a key-value type storage system. Therefore, the recording and reproducing system 10 does not have a hierarchical structure such as a directory on the storage node 12, and the object is identified by an object key as an example of identification information of the object.

Here, in the recording and reproducing system 10 according to the present embodiment, the user can create a directory on a management screen displayed on the user terminal 11. That is, the recording and reproducing system 10 does not have a hierarchical structure on the storage node 12, but appears to have a hierarchical structure on the management screen referenced by the user. The management screen may also be referred to as a management console.

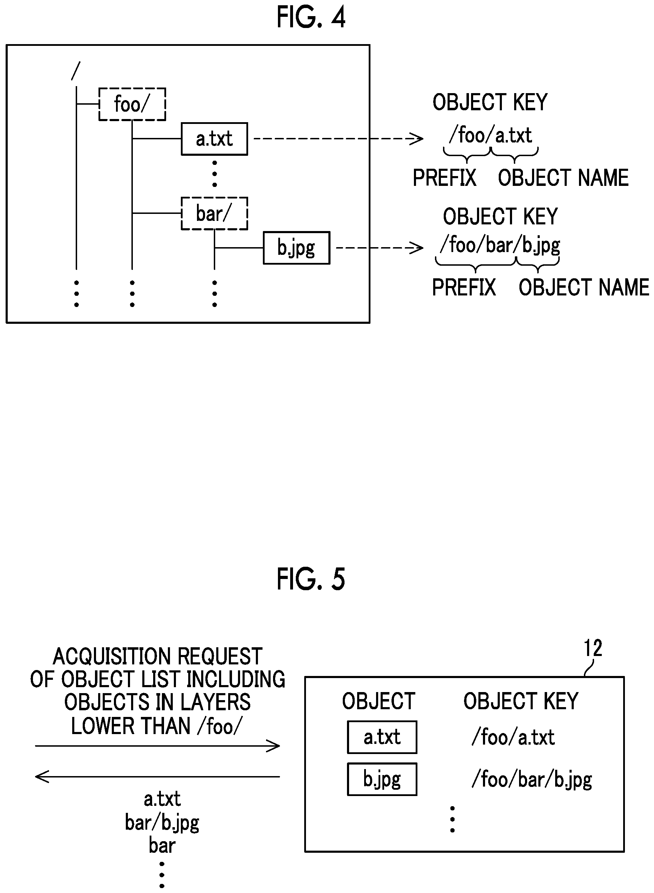

Fig. 4 is a diagram illustrating an example of a management screen. In Fig. 4, a broken-line rectangle represents a directory created on the management screen by the user, and a solid-line rectangle represents an object saved in the directory by the user. The user operates the user terminal 11, and performs an operation of designating a directory on the management screen and saving an object in the directory. An object key for uniquely identifying the object in the system is given to the object. In the present embodiment, in the object key, a portion representing a hierarchical structure (for example, a full path of a directory in which an object is saved on a management screen) and an object name are connected. In each directory, an object having the same name cannot be saved. Thus, the object key is a unique key for each object. A part or the whole of the portion representing the hierarchical structure is referred to as a "prefix". In addition, each directory name of the portion representing the hierarchical structure and the object name are separated by a separator (also referred to as a delimiter). In the present embodiment, an example in which "/" is used as a delimiter will be described.

By the way, each storage node 12 has a function of providing a list of objects held by the own storage node (hereinafter, referred to as "object list"). The object held by each storage node 12 means an object recorded on the magnetic tape T loaded in the logical library 15 corresponding to the storage node 12.

The function of providing an object list of each storage node 12 will be described with reference to Fig. 5. As illustrated in Fig. 5, the storage node 12 receives an acquisition request of an object list. In a case where an acquisition request is received, a prefix (hereinafter, referred to as "first prefix") representing a hierarchy of an object list to be acquired is designated. In the example of Fig. 5, an example in which "/foo/" is designated as the first prefix is illustrated.

In response to the received acquisition request, the storage node 12 responds an object list including predetermined number K1 (for example, 1000) objects among objects each of which has a head of the object key including the designated first prefix. The object list includes a portion other than the first prefix of the object key. In addition, the object list includes not only the object but also a prefix, that is, a directory created on the management screen by the user.

As illustrated in Fig. 5 as an example, in a case where the storage node 12 holds an object of which the object key is "/foo/a.txt" and an object of which the object key is "/foo/bar/b.jpg", the object list includes "a.txt" and "bar/b.jpg" corresponding to the objects and "bar" corresponding to a prefix. In the following, the prefix included in the object list is referred to as a "second prefix". It can be said that the object included in the object list is a portion obtained by excluding the first prefix from the object key and the second prefix is a portion obtained by excluding the object name, the first prefix, and the delimiter in the object key.

In addition, in a case where the storage node 12 responds the object list including K1 objects and then receives a subsequent acquisition request of an object list, the storage node 12 responds an object list including K1 objects among objects which are not responded so far. An order in which the storage node responds an object list is not particularly limited. For example, an order that is preset by the user is used as an example. Examples of the order include an ascending order or a descending order of a Unicode value of the object key, an ascending order or a descending order of a last update date and time of the object, and the like.

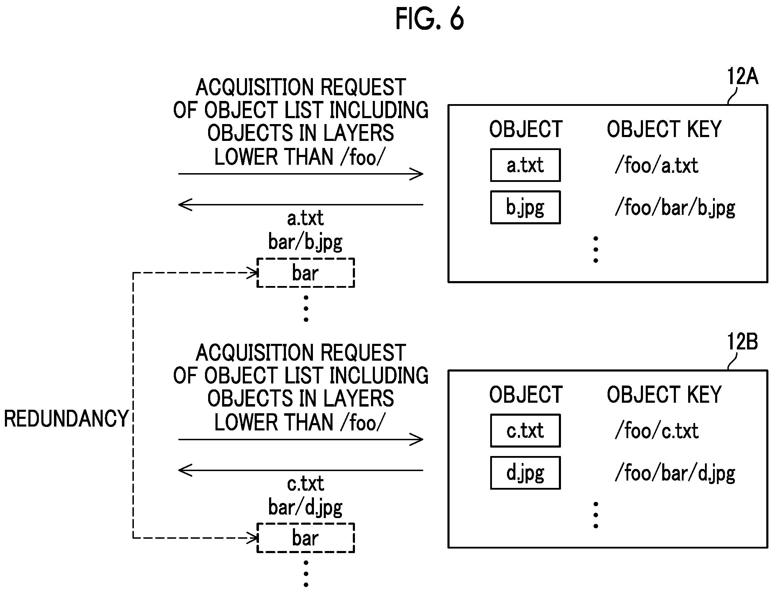

In a case where one storage node 12 is provided, the objects and the prefixes included in the object list do not include redundancy. On the other hand, as illustrated in Fig. 6 as an example, in a case where a plurality of storage nodes 12 are provided, the object key for the object is unique in the system, and thus the object list does not include redundancy. However, for the second prefix, the object list may include redundancy. The information processing apparatus 16 according to the present embodiment has a function of removing redundancy of the second prefix in the object list. In the following, objects each of which has the head of the object key including the first prefix and the second prefix are referred to as "objects to be processed".

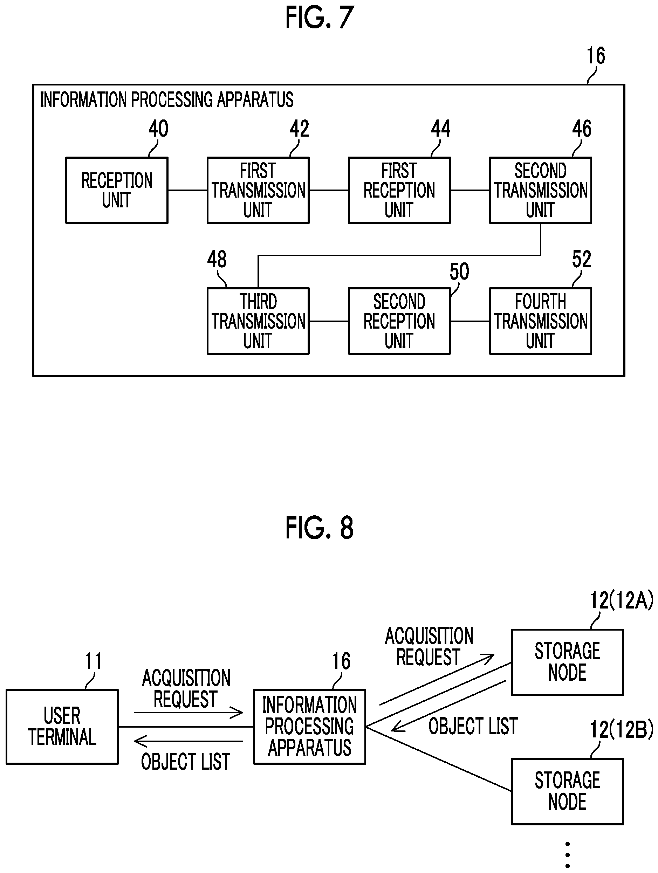

Next, a functional configuration of the information processing apparatus 16 according to the present embodiment will be described with reference to Fig. 7. As illustrated in Fig. 7, the information processing apparatus 16 includes a reception unit 40, a first transmission unit 42, a first reception unit 44, a second transmission unit 46, a third transmission unit 48, a second reception unit 50, and a fourth transmission unit 52. In a case where the CPU 20 executes the information processing program 30, the information processing apparatus 16 functions as the reception unit 40, the first transmission unit 42, the first reception unit 44, the second transmission unit 46, the third transmission unit 48, the second reception unit 50, and the fourth transmission unit 52.

The reception unit 40 receives an acquisition request of an object list that is transmitted from the user terminal 11. The acquisition request includes a first prefix designated by the user.

The first transmission unit 42 sequentially transmits, to each of the plurality of storage nodes 12, an acquisition request of a first object list corresponding to the first prefix included in the acquisition request received by the reception unit 40. As described above, the storage node 12 transmits an object list including K1 objects among the objects each of which has a head of the object key including the designated first prefix, to the information processing apparatus 16.

The first reception unit 44 sequentially receives the first object list corresponding to the acquisition request of the first object list from each of the plurality of storage nodes 12.

In a case where a storage node 12 that is already processed (hereinafter, referred to as a "processed storage node") exists, the second transmission unit 46 inquires of the processed storage node whether or not the processed storage node holds the second prefix included in the first object list received from a storage node 12 that is being processed (hereinafter, referred to as a "storage node being processed").

In a case where a response indicating that the processed storage node holds the second prefix is received from the processed storage node, the third transmission unit 48 removes the second prefix held by the processed storage node from the first object list received from the storage node being processed, and transmits an acquisition request of a second object list including objects of which the number is decreased by removal of the second prefix to the storage node being processed.

The second reception unit 50 receives the second object list responded from the storage node being processed. The fourth transmission unit 52 transmits, to the user terminal 11, an object list obtained by adding the second object list to the first object list from which the second prefix is removed. In addition, in a case where a processed storage node does not exist, the fourth transmission unit 52 transmits the first object list received by the first reception unit 44 to the user terminal 11. In addition, in a case where a processed storage node exists and a response indicating that the processed storage node does not hold the second prefix is received from the processed storage node, the fourth transmission unit 52 transmits the first object list received by the first reception unit 44 to the user terminal 11.

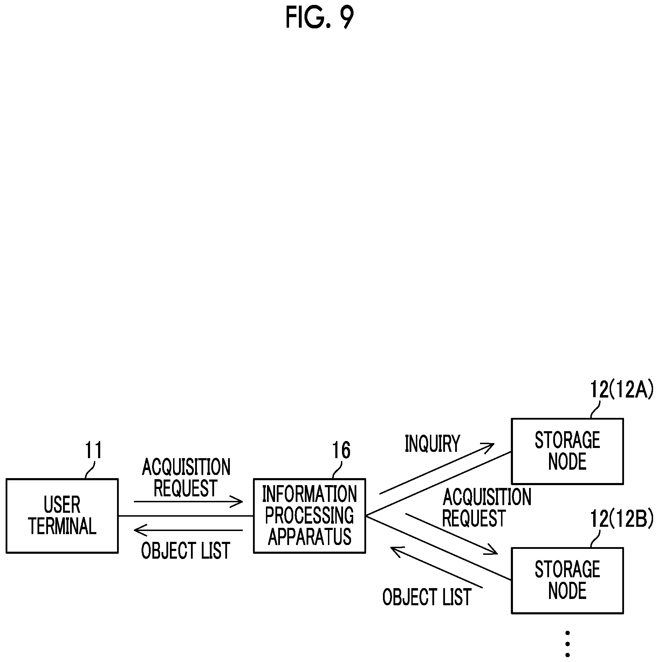

Details of the function of the information processing apparatus 16 will be further described with reference to Fig. 8 and Fig. 9. As illustrated in Fig. 8, in a case where the reception unit 40 first receives an acquisition request of an object list that is transmitted from the user terminal 11, the first transmission unit 42 transmits an acquisition request of a first object list to the first storage node 12A. The first reception unit 44 receives, from the storage node 12A, a first object list that includes K1 objects and corresponds to the acquisition request of the first object list. The fourth transmission unit 52 transmits the first object list received by the first reception unit 44 to the user terminal 11.

In a case where the user wants to acquire an object list subsequent to the first object list that includes K1 objects and is received by the user terminal 11, the user causes the user terminal 11 to transmit an acquisition request of a subsequent object list to the information processing apparatus 16 by operating the user terminal 11. In this case, the first transmission unit 42 transmits an acquisition request of a first object list to the first storage node 12A. The first reception unit 44 receives, from the storage node 12A, a first object list that includes K1 objects and corresponds to the acquisition request of the first object list. The fourth transmission unit 52 transmits the first object list received by the first reception unit 44 to the user terminal 11. The information processing apparatus 16 repeats the above processing until the first object list for all the objects to be processed that are held by the first storage node 12A is transmitted to the user terminal 11.

In a case where the first object list for all the objects to be processed that are held by the first storage node 12A is transmitted to the user terminal 11 and then an acquisition request of a subsequent object list that is transmitted from the user terminal 11 is received, the information processing apparatus 16 sets the second storage node 12B as a storage node to be processed. In this way, the storage node 12 on which processing of acquiring the object list for all the objects to be processed that are held by the own storage node is completed is the above-described processed storage node. In addition, the storage node 12 on which processing of acquiring the object list is to be performed is the above-described storage node being processed. Therefore, for example, in a case where the storage nodes 12A, 12B, and 12C are to be processed in this order, the storage node 12A is a processed storage node in a case where the storage node 12B is a storage node being processed. Further, in this case, the storage nodes 12A and 12B are processed storage nodes in a case where the storage node 12C is a storage node being processed.

As described above, in a case where the second and subsequent storage nodes 12 are storage nodes being processed, redundancy of the second prefix may occur between the first object list that is received from the storage node being processed and the object list that is received from the processed storage node and is already transmitted to the user terminal 11.

Thus, as illustrated in Fig. 9 as an example, the second transmission unit 46 inquires of the processed storage node (in the example of Fig. 9, the storage node 12A) whether or not the processed storage node holds the second prefix included in the first object list received from the storage node being processed (in the example of Fig. 9, the storage node 12B).

In addition, in a case where a response indicating that the processed storage node holds the second prefix is received from the processed storage node, the third transmission unit 48 removes the second prefix held by the processed storage node from the first object list received from the storage node being processed. For example, in a case where the first object list received from each of the storage nodes 12A and 12B includes the second prefix "bar", "bar" is removed from the first object list received from the storage node 12B. Further, the third transmission unit 48 transmits, to the storage node being processed, an acquisition request of a second object list including objects of which the number is decreased by removal of the second prefix.

As a specific example, a case where the information processing apparatus 16 receives the first object list including 1000 objects from the storage node being processed and the first object list includes 100 second prefixes will be described. In this case, in a case where a response indicating that the processed storage node holds 30 second prefixes among the 100 second prefixes is received from the processed storage node, the third transmission unit 48 removes the 30 second prefixes that are held by the processed storage node from the first object list received from the storage node being processed. In addition, the third transmission unit 48 transmits, to the storage node being processed, an acquisition request of a second object list including objects of which the number is decreased by removal of the second prefixes. In response to the acquisition request, the storage node being processed transmits the second object list including 30 objects to the information processing apparatus 16.

In the same manner as in the first object list, for the second object list, the second transmission unit 46 inquires of the processed storage node whether or not the processed storage node holds the second prefix included in the second object list. In addition, in a case where a response indicating that the processed storage node holds the second prefix is received from the processed storage node, the third transmission unit 48 repeats processing of removing the second prefix held by the processed storage node from the second object list received from the storage node being processed until a response indicating that the processed storage node does not hold the second prefix is received from the processed storage node. Thereby, even in a case where redundancy is removed from the first object list, the object list including K1 objects is transmitted to the user terminal 11.

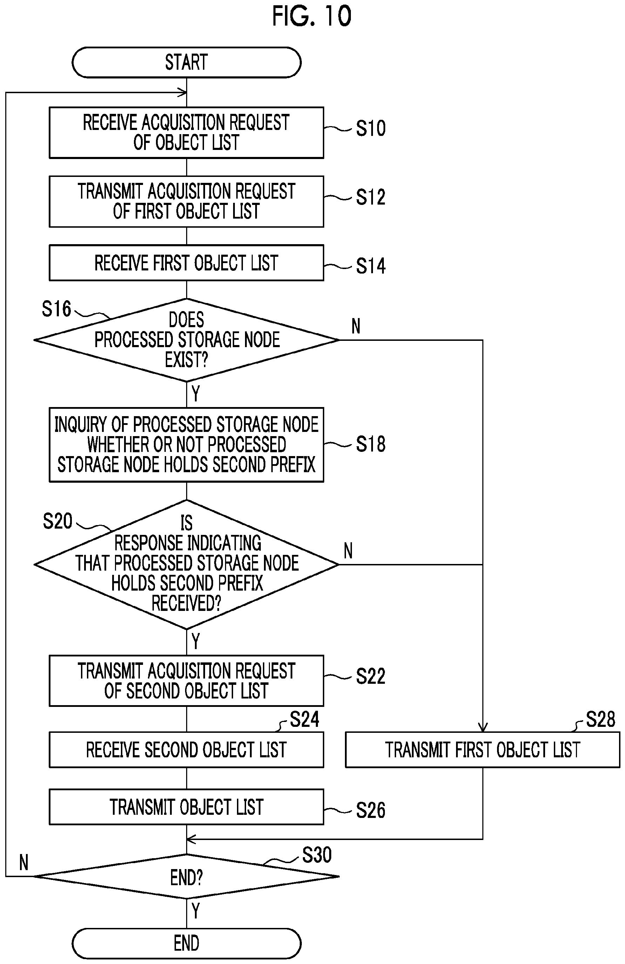

Next, an operation of the information processing apparatus 16 according to the present embodiment will be described with reference to Fig. 10. In a case where the CPU 20 executes the information processing program 30, object list acquisition processing illustrated in Fig. 10 is executed. The object list acquisition processing illustrated in Fig. 10 is executed, for example, in a case where the information processing apparatus 16 receives an acquisition request of an object list that is transmitted from the user terminal 11.

In step S10 of Fig. 10, an acquisition request of an object list that is transmitted from the user terminal 11 is received. In step S12, the first transmission unit 42 transmits, to the storage node being processed, an acquisition request of a first object list corresponding to the first prefix included in the acquisition request received in step S10. In a case where transmission of the object list for all the objects to be processed that are held by the storage node being processed to the user terminal 11 is completed, the storage node being processed is switched to a next storage node 12.

In step S14, the first reception unit 44 receives, from the storage node being processed, a first object list corresponding to the acquisition request of the first object list that is transmitted in step S12. In step S16, the second transmission unit 46 determines whether or not a processed storage node exists. In a case where the determination result is YES, the process proceeds to step S18.

In step S18, the second transmission unit 46 inquires of the processed storage node whether or not the processed storage node holds the second prefix included in the first object list received in step S14 from the storage node being processed. In step S20, in response to the inquiry in step S18, the third transmission unit 48 determines whether or not a response indicating that the processed storage node holds the second prefix is received from the processed storage node. In a case where the determination result is YES, the process proceeds to step S22.

In step S22, the third transmission unit 48 removes the second prefix held by the processed storage node from the first object list received in step S14 from the storage node being processed, and transmits an acquisition request of a second object list including objects of which the number is decreased by removal of the second prefix to the storage node being processed. In step S24, in response to the acquisition request in step S22, the second reception unit 50 receives a second object list responded from the storage node being processed. As described above, for the second object list, processing of removing the second prefix held by the processed storage node from the second object list is repeated until a response indicating the processed storage node does not hold the second prefix is received from the processed storage node.

In step S26, the fourth transmission unit 52 transmits, to the user terminal 11, an object list obtained by adding the second object list to the first object list from which the second prefix is removed. In a case where the processing of step S26 is completed, the process proceeds to step S30.

On the other hand, in a case where a determination result in step S16 is NO, the process proceeds to step S28. In addition, even in a case where a determination result in step S20 is NO, the process proceeds to step S28. In step S28, the fourth transmission unit 52 transmits the first object list received in step S14 to the user terminal 11. In a case where the processing of step S28 is completed, the process proceeds to step S30.

In step S30, the fourth transmission unit 52 determines whether or not to end processing of acquiring an object list. For example, in a case where a subsequent acquisition request of an object list is transmitted from the user terminal 11, a determination result in step S30 is NO, and the process returns to step S10. In addition, for example, in a case where an end request of object list acquisition processing is transmitted from the user terminal 11, a determination result in step S30 is Yes, and object list acquisition processing is ended.

As described above, according to the present embodiment, it is possible to remove redundancy included in the object list acquired from each of the plurality of storage nodes 12.

In the embodiment, in a case where the acquisition request of an object list that is transmitted from the user terminal 11 does not include the first prefix, the information processing apparatus 16 may set all the objects held by the plurality of storage nodes 12 as the objects to be processed and execute object list acquisition processing. Specifically, in this case, for example, the information processing apparatus 16 executes object list acquisition processing illustrated in Fig. 10 by using "/" as the first prefix.

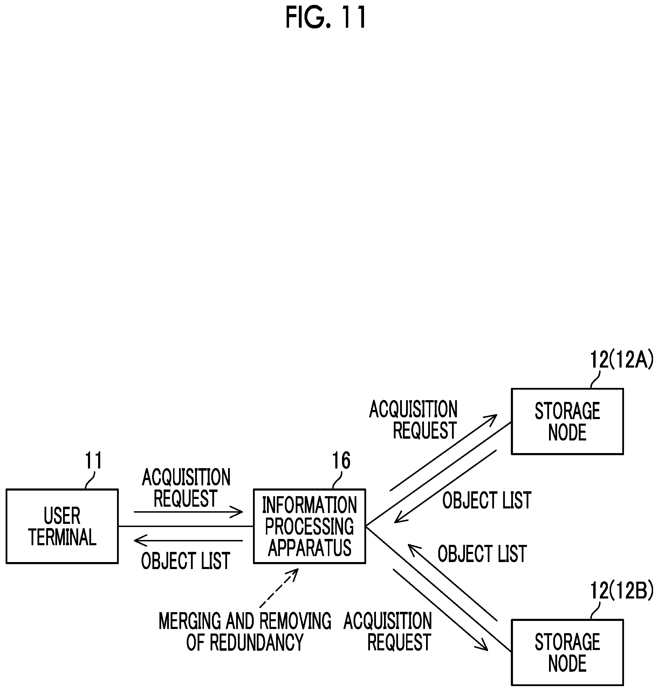

Further, for example, the information processing apparatus 16 may execute object list acquisition processing according to the embodiment in a case where the number of the storage nodes 12 is equal to or larger than a predetermined threshold value. In this case, in a case where the number of the storage nodes 12 is smaller than the threshold value, the information processing apparatus 16 executes the following processing. Processing in this case will be described with reference to Fig. 11.

As illustrated in Fig. 11 as an example, in a case where the number of the storage nodes 12 is smaller than the threshold value, the information processing apparatus 16 receives an object list corresponding to the first prefix from each of the plurality of storage nodes 12. In addition, in this case, the information processing apparatus 16 removes redundancy of the second prefix in a plurality of the received object lists, and transmits an object list obtained by merging the plurality of object lists to the user terminal 11.

Further, in the embodiment, a case where the technique according to the present disclosure is applied to an object storage system has been described. On the other hand, the present disclosure is not limited thereto. The technique according to the present disclosure may be applied to a file storage system that handles data in file units.

Further, in the embodiment, for example, as a hardware structure of a processing unit that executes various processing, such as the reception unit 40, the first transmission unit 42, the first reception unit 44, the second transmission unit 46, the third transmission unit 48, the second reception unit 50, and the fourth transmission unit 52, the following various processors may be used. The various processors include, as described above, a CPU, which is a general-purpose processor that functions as various processing units by executing software (program), and a dedicated electric circuit, which is a processor having a circuit configuration specifically designed to execute a specific processing, such as a programmable logic device (PLD) or an application specific integrated circuit (ASIC) that is a processor of which the circuit configuration may be changed after manufacturing such as a field programmable gate array (FPGA).

One processing unit may be configured by one of these various processors, or may be configured by a combination of two or more processors of the same type or different types (for example, a combination of a plurality of FPGAs or a combination of a CPU and an FPGA). Further, the plurality of processing units may be configured by one processor.

As an example in which the plurality of processing units are configured by one processor, firstly, as represented by a computer such as a client and a server, a form in which one processor is configured by a combination of one or more CPUs and software and the processor functions as the plurality of processing units may be adopted. Secondly, as represented by a system on chip (SoC) or the like, a form in which a processor that realizes the function of the entire system including the plurality of processing units by one integrated circuit (IC) chip is used may be adopted. As described above, the various processing units are configured by using one or more various processors as a hardware structure.

Further, as the hardware structure of the various processors, more specifically, an electric circuit (circuitry) in which circuit elements such as semiconductor elements are combined may be used.

Further, in the embodiment, an example in which the information processing program 30 is stored (installed) in the storage unit 22 in advance has been described. On the other hand, the present disclosure is not limited thereto. The information processing program 30 may be provided by being recorded in a recording medium such as a compact disc read only memory (CD-ROM), a digital versatile disc read only memory (DVD-ROM), or a Universal Serial Bus (USB) memory. Further, the information processing program 30 may be downloaded from an external apparatus via a network.

In the disclosure of Japanese Patent Application No. 2020-140419, filed August 21, 2020, the entire contents of which are incorporated herein by reference. Further, all documents, patent applications, and technical standards mentioned in this specification are incorporated herein by reference to the same extent as in a case where each document, each patent application, and each technical standard are specifically and individually described by being incorporated by reference.

## Claims

1. An information processing apparatus comprising:
at least one processor,
wherein the processor is configured to execute object list acquisition processing including
receiving an acquisition request of an object list that is transmitted from a user terminal,
sequentially transmitting, to each of a plurality of storage nodes, an acquisition request of a first object list corresponding to a first prefix according to the acquisition request,
sequentially receiving the first object list corresponding to the acquisition request of the first object list from each of the plurality of storage nodes,
inquiring, in a case where a processed storage node which is the storage node that is already processed exists, of the processed storage node whether or not the processed storage node holds a second prefix included in the first object list received from a storage node being processed,
removing, in a case where a response indicating that the processed storage node holds the second prefix is received from the processed storage node, the second prefix held by the processed storage node from the first object list received from the storage node being processed and transmitting an acquisition request of a second object list including objects of which the number is decreased by removal of the second prefix to the storage node being processed,
receiving the second object list responded from the storage node being processed, and
transmitting, to the user terminal, an object list obtained by adding the second object list to the first object list from which the second prefix is removed.

2. The information processing apparatus according to claim 1,
wherein the processor is configured to
execute the object list acquisition processing in a case where the number of the storage nodes is equal to or larger than a predetermined threshold value,
receive the object list from each of the plurality of storage nodes in a case where the number of the storage nodes is smaller than the threshold value, and
remove redundancy of the second prefix in a plurality of the received object lists and transmit an object list obtained by merging the plurality of object lists to the user terminal.

3. The information processing apparatus according to claim 1 or 2,
wherein the processor is configured to inquire, in the object list acquisition processing, for the second object list, of the processed storage node whether or not the processed storage node holds the second prefix in the same manner as in the first object list and repeat, in a case where a response indicating that the processed storage node holds the second prefix is received from the processed storage node, processing of removing the second prefix held by the processed storage node from the second object list received from the storage node being processed until a response indicating that the processed storage node does not hold the second prefix is received from the processed storage node.

4. The information processing apparatus according to any one of claims 1 to 3,
wherein the storage node is a storage node that constitutes an object storage system,
the first prefix is a portion of an object key that represents a hierarchy of an object list to be acquired, and
the second prefix is a portion of the object key that is obtained by excluding at least an object name and the first prefix.

5. The information processing apparatus according to any one of claims 1 to 4,
wherein the processor is configured to set, in a case where the acquisition request of the object list that is transmitted from the user terminal does not include the first prefix, all objects held by the plurality of storage nodes as objects to be processed and execute the object list acquisition processing.

6. An information processing method executed by a processor of an information processing apparatus, the method comprising:
object list acquisition processing including
receiving an acquisition request of an object list that is transmitted from a user terminal,
sequentially transmitting, to each of a plurality of storage nodes, an acquisition request of a first object list corresponding to a first prefix according to the acquisition request,
sequentially receiving the first object list corresponding to the acquisition request of the first object list from each of the plurality of storage nodes,
inquiring, in a case where a processed storage node which is the storage node that is already processed exists, of the processed storage node whether or not the processed storage node holds a second prefix included in the first object list received from a storage node being processed,
removing, in a case where a response indicating that the processed storage node holds the second prefix is received from the processed storage node, the second prefix held by the processed storage node from the first object list received from the storage node being processed and transmitting an acquisition request of a second object list including objects of which the number is decreased by removal of the second prefix to the storage node being processed,
receiving the second object list responded from the storage node being processed, and
transmitting, to the user terminal, an object list obtained by adding the second object list to the first object list from which the second prefix is removed.

7. An information processing program for causing a processor of an information processing apparatus to execute object list acquisition processing comprising:
receiving an acquisition request of an object list that is transmitted from a user terminal;
sequentially transmitting, to each of a plurality of storage nodes, an acquisition request of a first object list corresponding to a first prefix according to the acquisition request;
sequentially receiving the first object list corresponding to the acquisition request of the first object list from each of the plurality of storage nodes;
inquiring, in a case where a processed storage node which is the storage node that is already processed exists, of the processed storage node whether or not the processed storage node holds a second prefix included in the first object list received from a storage node being processed;
removing, in a case where a response indicating that the processed storage node holds the second prefix is received from the processed storage node, the second prefix held by the processed storage node from the first object list received from the storage node being processed and transmitting an acquisition request of a second object list including objects of which the number is decreased by removal of the second prefix to the storage node being processed;
receiving the second object list responded from the storage node being processed; and
transmitting, to the user terminal, an object list obtained by adding the second object list to the first object list from which the second prefix is removed.
